# EUROPÄISCHE PATENTSCHRIFT

(11) **EP 4 631 737 B1**
(45) Veröffentlichungstag und Bekanntmachung des Hinweises auf die Patenterteilung: **18.02.2026**
(21) Anmeldenummer: 25156131.2
(22) Anmeldetag: 06.02.2025
(51) Int. Cl.: B42D 25/324, B42D 25/378, B42D 25/405, B33Y 50/00, B41M 3/14, B42D 25/23, B41J 3/54

(54) **VERFAHREN UND VORRICHTUNG ZUM HERSTELLEN EINES PLASTISCHEN DESIGNELEMENTS AUF EINEM AUTHENTISIERUNGSDATENTRÄGER**
METHOD AND DEVICE FOR PRODUCING A PLASTIC DESIGN ELEMENT ON AN AUTHENTICATION DATA CARRIER
PROCÉDÉ ET DISPOSITIF DE FABRICATION D'UN ÉLÉMENT DE CONCEPTION PLASTIQUE SUR UN SUPPORT DE DONNÉES D'AUTHENTIFICATION

(30) Priorität: 09.04.2024 DE 102024109774
(43) Veröffentlichungstag der Anmeldung: 15.10.2025
(73) Patentinhaber: Giesecke+Devrient ePayments GmbH, 81677 München (DE)
(72) Erfinder: Behlendorf, Sascha, 81677 München (DE)
(74) Vertreter: Giesecke+Devrient IP

(56) Entgegenhaltungen:
- WO-A1-2021/058097
- DE-A1- 102019 203 173
- US-B1- 10 513 081
- US-B2- 11 341 287
- US-B2- 7 712 673

## Beschreibung

Gegenstand der Erfindung ist die drucktechnische Herstellung von plastischen Designelementen auf einen flächigen kleinformatigen Sicherheitselement. Insbesondere richtet sich die Erfindung auf das Aufbringen eines dreidimensionalen Druckmusters auf einen Authentisierungsdatenträger. Gegenstand der Erfindung ist weiterhin eine entsprechende Vorrichtung zum Herstellen eines plastischen Designelements auf einem Authentisierungsdatenträger.

Aus der US9514393B2 ist ein Verfahren zum drucktechnischen Herstellen von erhabenen Designelementen auf einer Bankkarte bekannt. Die Designelemente werden durch mehrfache Wiederholung eines üblichen 2D-Druckvorgangs erzeugt. Durch Steuerung der jeweils durchgeführten Anzahl an Druckvorgängen und der Druckzeit werden unterschiedliche Höhen eingestellt. Auf diese Weise lassen sich 3D-Druckmuster herstellen. Das Verfahren ist günstig aber auch langsam. Es erfordert in einem Vorbereitungsschritt die genaue Berechnung der notwendigen Druckvorgänge und Druckzeiten.

Aus der WO2017/076489A1 ist eine Transaktionskarte bekannt, deren Oberfläche mit einem 3D-Druckmuster versehen ist. Das Druckmuster wird mittels eines Druckverfahrens zum Herstellen dreidimensionaler Gegenstände aufgebracht. Es lassen sich Karten mit beachtlichen 3D-Effekten herstellen. Die Herstellung entsprechender Transaktionskarten erfordert jedoch in einem Vorbereitungsschritt die Erstellung eines individuellen Designs, das die angehobenen Bereiche in einem maschinenlesbaren Format enthält. Die Lösung eignet sich deshalb kommerziell nicht für individuelle Designs.

Aus der US 10513081 B1 ist ein Verfahren zur Herstellung eine Zahlungskarte bekannt, auf deren Oberfläche mittels 3D-Druck erzeugte Konturen ausgebildet sind. Die Ausbildung des 3D-Druckes erfolgt im Rahmen der Personalisierung an einer für den dreidimensionalen Druck geeigneten Druckstation.

Aus der DE 102019203173 A1 ist ein Verfahren zur Herstellung eines dreidimensionalen Motiv- und Informationsträgers bekannt, nach dem digitale Daten eines Motivs bereitgestellt werden, anhand derer die Oberfläche eines plastisch verformbaren Untergrunds farbig bedruckt wird. Aus der digitalen Information werden weiterhin 3D-Daten des Motivs gewonnen, gemäß denen der bedruckte Träger mit einem Prägewerkzeug 3D-geprägt wird.

Aus der WO2021058097A1 ist ein Verfahren zum Erzeugen eines Kantenbildes aus einer Bildvorlage bekannt, bei dem ein Ausgangsbild, das etwa in Gestalt eines Graustufenbildes vorliegt, mittels Kantendetektion in ein Kantenbild überführt wird, das nach Art einer Malvorlage die Konturen des im Ausgangsbild enthaltenen Motivs wiedergibt. Es ist Aufgabe der Erfindung, ein effizientes Verfahren anzugeben, das bei vertretbarem Vorbereitungsaufwand die Ausbildung wirksamer 3D-Effekte erlaubt.

Die Aufgabe wird gelöst durch ein Verfahren mit den Merkmalen des Hauptanspruchs.

Das erfindungsgemäße Verfahren und ebenso die Vorrichtung zeichnen sich dadurch aus, dass sie eine flexible Ausbildung von Druckmustern mit dreidimensionalen Designelementen auf Authentisierungsdatenträgern ermöglichen. Es wird mit vertretbarem Aufwand möglich, kleine bis kleinste Auftragsgrößen zu bearbeiten und gute Ergebnisse zu erhalten. Die Ausführung der Aufträge kann vorteilhaft weitgehend automatisiert erfolgen.

Ein besonderer Vorteil des erfindungsgemäßen Verfahrens ist die Ableitung der 3D-Druckvorlage aus einer Kantendetektion in den Druckdaten. Die Festlegung von Druckstärken kann dadurch automatisiert erfolgen. Zudem kann die Druckstärkenfestlegung über viele Parameter gesteuert werden, so dass gute Druckergebnisse erzielt werden.

Für eine effektive Verfahrensdurchführung wird die verfahrensgemäß vorgesehene Kantendetektion bevorzugt nur in solchen Bereichen eines Druckmusters vorgenommen, in denen dreidimensionale Designelemente vorgesehen sind.

Die erfindungsgemäße Vorrichtung hat den Vorteil, dass sie sich mit geringem Aufwand basierend auf an sich bekannten Komponenten und Verfahren einfach aufbauen lässt.

Weitere vorteilhafte Weiterbildungen und Ausgestaltungen ergeben sich aus den Merkmalen der abhängigen Ansprüche.

Beschreibung der Figuren
Fig. 1 zeigt eine Anordnung zur Durchführung des Verfahrens
Fig. 2 zeigt die im Verfahren durchgeführten Schritte als Flußdiagramm
Fig. 3 zeigt einen Authentisierungsdatenträger vor und nach dem aufbringen eines Druckmusters

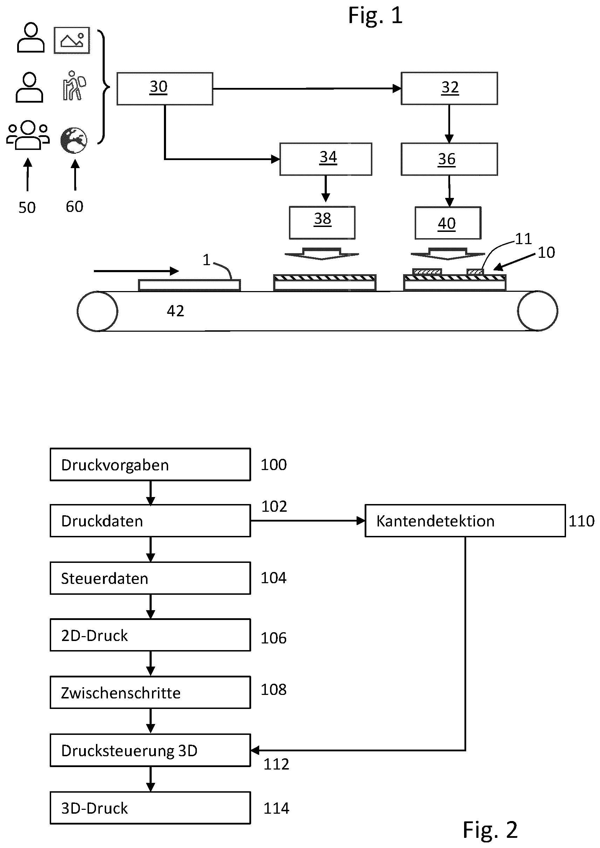

Fig. 1 zeigt schematisch eine Anordnung zum Aufbringen eines Druckmusters 10 auf einen Authentisierungsdatenträger 1. Die Anordnung umfasst nicht abschließend eine Bildaufbereitungseinrichtung 30, eine mit der Bildaufbereitungseinrichtung verbundene Kantendetektionseinrichtung 32 sowie eine erste Drucksteuereinrichtung 34 und eine zweite Drucksteuereinrichtung 36. Die erste Drucksteuereinrichtung 32 ist mit der Bildaufbereitungseinrichtung 30 verbunden, die zweite Drucksteuereinrichtung 34 mit der Kantendetektionseinrichtung 32. Die Anordnung umfasst weiter eine erste, mit der ersten Drucksteuereinrichtung 32 verbundene Druckeinheit 38 zur Ausführung von 2D-Druckvorgängen sowie eine zweite Druckeinheit40 zur Ausführung von 3D-Druckvorgängen, die mit der Kantendetektionseinrichtung verbunden ist. Weiterer Bestandteil der Anordnung ist eine Transportvorrichtung 42 zur Beförderung von Authentisierungsdatenträgern 1 von der ersten Druckeinheit 38 zur zweiten Druckeinheit 40.

Der Authentisierungsdatenträger 1 hat die Gestalt eines flächigen kleinformatigen Sicherheitselements. Beispielsweise kann er eine mit einem Chip versehene Zahlungskarte oder eine Ausweiskarte im Kreditkartenformat sein. Der Authentisierungsdatenträger 1 kann auch die Form eines Schlüsselanhängers oder eines beliebig anders gestalteten kleinformatigen, flächigen Gegenstandes haben.

Der Authentisierungsdatenträger 1 besitzt zumindest eine Oberfläche 2, auf die ein Druckmuster 10 aufgebracht wird. Das Druckmuster 10 kann grafische, bildliche und/oder alphanumerische Elemente umfassen. Es kann ganz oder teilweise farbig oder schwarz-weiß ausgeführt sein. Es kann die gesamte Oberfläche eines Authentisierungsdatenträgers bedecken oder Teile davon. Zumindest ein Teil des Druckmusters 10 ist basierend auf von Nutzern 50 bereitgestellten Ausgangsbildern erzeugt.

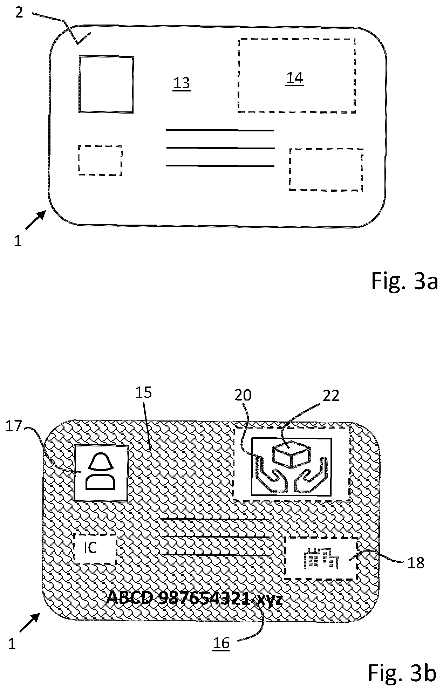

Das Druckmuster 10 enthält zumindest ein plastisches Designelement 11, d.h. einen Bereich, in dem das Druckmuster 10 als erhabener Druckauftrag ausgeführt ist. Zweckmäßig teilt sich das Druckmuster 10, wie in Fig. 3 veranschaulicht, in erste Bereiche 13, in denen ein üblicher zweidimensionaler Druck ausgeführt ist, und zweite Bereiche 14, in denen ein oder mehrere plastische Designelemente 11 in Form eines erhabenen, dreidimensionalen Druckauftrages ausgebildet sind.

Wie in Fig. 3 dargestellt kann das Druckmuster 1 zum Beispiel aus einem größeren ersten Bereich 13 und einem im Vergleich kleineren zweiten Bereich 14 bestehen. Im ersten Bereich 13 ist ein grafisches Grundmuster 15 und darauf eine alphanumerische Information 16, ein Foto 17 sowie ein grafisches Element 18 ausgebildet. Im zweiten Bereich 14 ist ein Motiv 19 in Form eines erhabenen Druckauftrages ausgeführt und bildet ein plastisches Designelement 11. Die Ausführung des plastischen Designelementes 11 kann beispielsweise darin bestehen, dass die dominierenden Kanten 20 des Motivs 19 erhaben ausgebildet sind.

In der Bildaufbereitungseinrichtung 20 werden Druckdaten erstellt. Hierzu werden für einen zu bearbeitenden Typ von Authentisierungsdatenträgern 1 vorgegebene Designvorgaben und Randbedingungen mit von Nutzern 50 bereitgestellten individuellen Ausgangsbildern 60 zusammengeführt.

Designvorgaben können zum Beispiel darin bestehen, dass von Nutzern 50 bereitgestellte Ausgangsbilder 60 nur in bestimmten Bereichen eines Druckmusters 1 bzw. nur in bestimmten Bereichen auf einem Authentisierungsdatenträger 1 plaziert werden können, während für die übrigen Bereiche ein feststehendes Design vorgegeben ist.

Randbedingungen sind beispielsweise die äußeren Abmessungen der zu bearbeitenden Authentisierungsdatenträger 1 sowie die Angabe von Bereichen, die nicht bedruckt werden können oder dürfen.

Die von der Bildaufbereitungseinrichtung 30 erzeugten Druckdaten werden zum einen an die erste Drucksteuereinheit 34 und zum anderen an die Kantendetektionseinrichtung 32 übergeben.

Nutzer 50 können beispielsweise Einzelpersonen sein, die Ausgangsbilder 60 mit individuellen Wunschmotiven bereitstellen, oder Unternehmen, die Ausgangsbilder 60 mit unternehmensspezifischen Motiven bereitstellen. Die Ausgangsbilder 60 werden in Form von üblichen Bilddatensätzen bereitgestellt.

Von der Bildaufbereitungseinheit 30 erzeugte Druckdaten können in erste Bereichsdaten unterteilt sein, die in Form eines üblichen zweidimensionalen Druckes auf einen Authentisierungsdatenträger 10ausgeführt werden, und zweite Bereichsdaten, in denen ein dreidimensionaler Druckauftrag erfolgt. Die ersten Bereichsdaten entsprechen dem ersten Bereich 13 im Druckmuster, die zweiten Bereichsdaten dem zweiten Bereich 14 im Druckmuster.

Die Kantendetektionseinheit 32 dient dazu, in den von der Bildaufbereitung 30 zugeführten Druckdaten mögliche plastische Designelemente 11 zu bestimmen, die anschließend als dreidimensionaler Druckauftrag hergestellt werden. Die Ausführung der Kantendetektion kann auf die zweiten Bereiche 14 beschränkt sein. Die Kantendetektion geschieht mittels eines an sich bekannten Verfahrens. Bestimmt werden die dominierenden Kanten 20, welche die in dem durch die Druckdaten bestimmten Motiv enthaltenen Flächenbereiche 22 voneinander abgrenzen. Die dominierenden Kanten 20 geben die Konturen der das Motiv 19 bildenden Elemente wieder.

In einer Ausführungsvariante bilden die durch die dominierenden Kanten 20 gebildeten Konturen die plastischen Designelemente 11, die nachfolgend als dreidimensionaler Druckauftrag hergestellt werden. Werden die von den dominierenden Kanten 20 begrenzten Flächen als ebener Druck ausgeführt, entsteht ein plastisches Designelement 11, dessen Motiv 19 durch erhaben ausgeführte Kanten 20 konturiert ist. Die Stärke des Druckauftrages richtet sich, sofern vorhanden, nach vorgegebenen Maximalhöhen. Maximalhöhen werden beispielsweise durch Kreditkartenorganisationen regelmäßig festgelegt und betragen in der Regel zwischen 0,40 und 0,48mm

In einer anderen Variante werden von den dominierenden Kanten 20 umschlossene Flächen 22 nachfolgend als dreidimensionaler Druckauftrag ausgeführt. Hierbei kann vorgesehen sein, dass sowohl die dominierenden Kanten 20 wie die enthaltenen Flächenbereiche 22 erhaben ausgeführt sind. Die enthaltenen Flächenbereiche 22 und die dominierenden Kanten 20 können dabei in unterschiedlichen Stärken ausgeführt sein. Die jeweiligen Stärken der enthaltenen Flächenbereiche 22 können zum Beispiel zu den Helligkeitswerten für diese Flächenbereiche 22 korrespondieren. Beispielsweise können Flächenbereiche 22 mit einer über einem festgelegten Grenzwert liegenden Helligkeit mit einer größeren Stärke ausgeführt sein als Flächenbereiche 22 mit einer unter dem Grenzwert liegenden Helligkeit. Zugleich können die dominierenden Kanten 20 in einer dritten Stärke ausgeführt sein. Alle Stärken sind wiederum auf gegebenenfalls vorgegebene Maximalhöhen abgestimmt. Vorgesehen sein kann auch, dass die Stärke, mit der die enthaltenen Flächenbereiche 22 22 aufgebracht werden, von weiteren und/oder anderen aus den Druckdaten ermittelten Informationen abhängt, beispielsweise von der lokalen Farbe oder der Position innerhalb eines Motivs 19 oder auf dem Authentisierungsdatenträger 1.

Die ermittelten Druckelemente setzt die Kantendetektionseinheit in 32 eine 3D-Druckvorlage um und übergibt diese an die zweite Drucksteuereinrichtung 36.

Die erste Drucksteuereinrichtung 34 dient dazu, von der Bildaufbereitung erhaltene Druckdaten in Steuerdaten umzusetzen, mittels derer die verbundene erste Druckeinheit 38 veranlasst wird, auf einen Authentisierungsdatenträger 1 ein übliches zweidimensionales Druckmuster entsprechend den Druckdaten aufzubringen.

Die zweite Drucksteuereinrichtung 36 dient dazu, von der Kantendetektionseinheit 32 erhaltene 3D-Druckvorlage in Steuerdaten umzusetzen, mittels denen die verbundene zweite Druckeinheit 40 veranlasst wird, auf einen Authentisierungsdatenträger 1 einen Druckauftrag mit einer durch die 3D-Druckvorlage bestimmten Stärke aufzubringen. Die Aufbringung des stärkeerhöhenden Druckauftrags erfolgt auf das zuvor erstellte flächige Druckmuster. Die erste Druckeinheit 38 ist eine übliche Druckeinheit zur Aufbringung eines flächigen, zweidimensionalen Druckmusters auf eine flache Unterlage. Die erste Druckeinheit kann beispielsweise ein Laserdrucker, ein Tintenstrahldrucker oder ein Thermo-Transfer-Drucker sein.

Die zweite Druckeinheit 40 ist eine an sich bekannte 3D-Druck-Machine, zum Beispiel eine Maschine des Typs UV84, angeboten von der Firma Direct Color Systems (DCS), ein digitaler 3-D-Flachbettdrucker, etc.

Die von den beiden Druckeinheiten 38, 40 für den Druckauftrag genutzten Druckmaterialien sind so aufeinander abgestimmt, dass sie einen festen Verbund eingehen. Hierfür können Zwischenschritte vorgesehen sein, in denen die erzeugten Druckaufträge zusätzlichen Materialbehandlungen unterzogen werden, beispielsweise einer UV-Trocknung zur Aushärtung eines Druckauftrages oder einer chemischen Vorbehandlung.

Die Transportvorrichtung 42 dient dazu, zu bearbeitende Authentisierungsdatenträger 1 zunächst der ersten Druckeinheit 38 und von dieser aus anschließend der zweiten Druckeinheit 40 zuzuführen, um sie in den Druckeinheiten 38, 40 jeweils mit Druckaufträgen zu versehen. Die Transportvorrichtung 42 kann, wie in der Fig. 1 angedeutet, ein Transportband sein. Sie kann aber auch auf beliebige andere Weise eingerichtet sein, etwa mittels Magazinen, die durch Robotergreifer umgesetzt werden.

Fig.2 zeigt die zur Aufbringung eines Druckmusters 2 auf einen Authentisierungsdatenträger 1 mittels der in Fig. 1 dargestellten Anordnung durchgeführten Ablaufschritte.

In einem vorbereitenden Schritt 100 werden der Bildaufbereitungseinheit 30 Druckvorgaben bereitgestellt. Hierzu werden durch Nutzer 50 individuelle Ausgangsbilder 60 bereitgestellt. Ferner werden vorgegebene Designvorgaben und Randbedingungen für den bearbeiteten Typ Authentisierungsdatenträger 1 bereitgestellt.

Aus den bereitgestellten individuellen Ausgangsbildern 60 und den für den zu bearbeitenden Typ von Authentisierungsdatenträgern 1 vorgegebenen Designvorgaben und Randbedingungen erstellt die Bildaufbereitungseinrichtung 30 in einem Schritt 102 Druckdaten. Die Druckdaten geben das Druckmuster 2 und die jeweils enthaltenen individuellen Ausgangsbilder 60 als flächiges Druckmuster wieder. Die Druckdaten übergibt die Bildaufbereitungseinrichtung 30 zum einen an die erste Drucksteuereinrichtung 34 und zum anderen an die Kantendetektionseinheit 32.

Die erste Drucksteuereinrichtung 34 erzeugt aus den erhaltenen Druckdaten im folgenden Schritt 104 Steuerdaten zur Ausbildung eines zweidimensionalen Druckmusters, die sie an die erste Druckeinheit 38 weiterleitet.

Entsprechend den erhaltenen Steuerdaten bringt die erste Druckeinheit 38 im folgenden Schritt 106 in einem ersten Druckvorgang ein flächiges Druckmuster (2D-Druck) auf den zugeführten Authentisierungsdatenträger 1 auf.

Nach Abschluss des Aufbringens des flächigen Druckmusters wird der Authentisierungsdatenträger 1 zur zweiten Druckeinheit 40 weiterbefördert. Hierbei können Zwischenschritte 108 vorgesehen sein, beispielsweise ein Trocknungsvorgang.

Aus den von der Bildaufbereitungseinheit 30 erhaltenen Druckdaten erzeugt die Kantendetektionseinheit 32 währenddessen in einem Schritt 110 eine 3D-Druckvorlage zur Erzeugung eines plastischen Designelementes 2. Die Kantendetektion seiner 32 führt hierzu an den Druckdaten mittels eines an sich üblichen Verfahrens eine Kantendetektion durch, um in den in den Druckdaten enthaltenen Motiven 19 die dominierenden Kanten 20 zu bestimmen, welche die motivbildenden enthaltenen Flächenbereiche 22 gegeneinander abgrenzen. Die dominierenden Kanten 20 geben die Konturen der das Motiv 19 bildenden Elemente wieder. Die Ausführung der Kantendetektion ist zweckmäßig auf die zweiten Bereiche 14 beschränkt. Die ermittelte 3D-Druckvorlage übergibt die Kantendetektionseinheit 32 der zweiten Drucksteuerungseinrichtung 36.

Die zweite Drucksteuereinrichtung 36 erzeugt aus der erhaltenen 3D-Druckvorlage im folgenden Schritt 112 Steuerdaten zur Ausbildung eines dreidimensionalen Druckmusters, die sie an die zweite Druckeinheit 40 weiterleitet.

Entsprechend den erhaltenen Steuerdaten bringt die zweite Druckeinheit 40 im folgenden Schritt 114 in einem zweiten Druckvorgang auf den zugeführten Authentisierungsdatenträger 1 über das im ersten Druckvorgang aufgebrachte flächige Druckmuster ein erhabenes, dreidimensionales Druckmuster (3D-Druck) auf.

An das Aufbringen des dreidimensionalen Druckmusters können sich - nicht gezeigte - Nachbearbeitungsschritte anschließen, etwa ein Aushärtungsvorgang.

Unter Beibehaltung des grundlegenden Gedankens, ein Druckmuster mit einem dreidimensionalen Designelement zu erzeugen, indem zunächst ein flächiges Druckmuster aufgebracht wird und auf dieses anschließend in einem separaten Druckvorgang ein erhabenes Druckmuster, das auf einer an dem flächigen Druckmuster durchgeführten Kantenreduktion beruht, gestattet die Erfindung eine Reihe von Ausgestaltungen, die nicht im einzelnen ausgeführt sind. So können die Stärken der dominierenden Kanten 20 und enthaltenen Flächenbereiche 22 in vielen Stufen abgestuft werden und die Abstufung anhand weiterer verfügbarer Rahmen- oder Druckinformation erfolgen. Die Druckvorgänge können örtlich und zeitlich getrennt erfolgen und es können weitere Zwischenschritte vorgesehen sein.

## Patentansprüche

1. Verfahren zum Herstellen eines plastischen Designelements auf einen Authentisierungsdatenträger mit den Schritten:
- Bereitstellen (100) eines individuellen Ausgangsbildes (60)
- Erzeugen von Druckdaten, die das Ausgangsbild (60) als flächiges Druckmuster wiedergeben (102),
- Aufbringen des Ausgangsbildes (60) als flächiges Druckmuster in einem ersten Druckvorgang (106),
- Durchführen einer Kantendetektion, um in den Druckdaten dominierende Kanten (20) zu bestimmen, welche die in den Druckdaten enthaltenen Flächenbereiche (22) voneinander abgrenzen und die Konturen des in dem Ausgangsbild (60) enthaltenen Motivs (19) wiedergeben (110),
- Erstellen einer 3D-Druckvorlage, die auf den gefundenen dominierenden Kanten (20) basiert,
- Aufbringen eines dreidimensionalen Druckmusters entsprechend der 3D-Druckvorlage auf das flächige Druckmuster in einem zweiten Druckvorgang (114).

2. Verfahren nach Anspruch 1, **dadurch gekennzeichnet, dass** zur Erzeugung der Druckdaten das von dem Nutzer (50) bereitgestellte individuelle Ausgangsbild (60) mit Designvorgaben und Randbedingungen für den zu bearbeitenden Typ Authentisierungsdatenträger (1) zusammengeführt werden.

3. Verfahren nach Anspruch 1, **dadurch gekennzeichnet, dass** die Druckdaten unterteilt sind in erste Bereichsdaten, die in Form eines üblichen zweidimensionalen Druckes auf einen Authentisierungsdatenträger (1) ausgeführt werden, und zweite Bereichsdaten, in denen ein dreidimensionaler Druckauftrag erfolgt.

4. Verfahren nach Anspruch 3, **dadurch gekennzeichnet, dass** die Kantendetektion nur in den zweiten Bereichsdaten ausgeführt wird

5. Verfahren nach Anspruch 1, **dadurch gekennzeichnet, dass** der 3D-Druck mit einer festgelegten Höhe ausgeführt wird.

6. Verfahren nach Anspruch 1, **dadurch gekennzeichnet, dass** die von dominierenden Kanten (20) gebildeten Konturen plastische Designelemente (11) bilden, die im zweiten Druckvorgang (114) als dreidimensionaler Druckauftrag hergestellt werden.

7. Verfahren nach Anspruch 1, **dadurch gekennzeichnet, dass** von den dominierenden Kanten (20) begrenzten Flächenberieche (22) im zweiten Druckvorgang als dreidimensionaler Druckauftrag ausgeführt werden (114).

8. Verfahren nach Anspruch 1, **dadurch gekennzeichnet, dass** die dominierenden Kanten (20) mit einer anderen Stärke aufgetragen werden als die begrenzten Flächenbereiche (22).

9. Verfahren nach Anspruch 1, **dadurch gekennzeichnet, dass** die Stärke, mit der die begrenzten Flächenbereiche (22) aufgebracht werden, von weiteren aus den Druckdaten ermittelten Informationen abhängt, insbesondere von der Farbe und/oder der Position.

10. Vorrichtung zum Herstellen eines plastischen Designelements auf einen Authentisierungsdatenträger mit
einer Bildaufbereitungseinrichtung (30), die dazu eingerichtet ist aus einem von einem Nutzer bereitgestellten individuellen Ausgangsbild (60) Druckdaten zu erzeugen, die das Ausgangsbild (60) als flächiges Druckmuster wiedergeben (102),
einer ersten Drucksteuereinrichtung (34), die dazu eingerichtet ist aus den erhaltenen Druckdaten Steuerdaten zur Ausbildung eines zweidimensionalen Druckmusters zu erzeugen (104),
einer ersten Druckeinheit (38), die dazu eingerichtet ist, entsprechend den Steuerdaten in einem ersten Druckvorgang ein flächiges Druckmuster auf den zugeführten Authentisierungsdatenträger (1) aufzubringen (106),
**dadurch gekennzeichnet, dass** sie weiterhin aufweist:
eine Kantendetektionseinrichtung (32, die dazu eingerichtet ist an den Druckdaten eine Kantendetektion durchzuführen, um eine 3D-Druckvorlage zur Ausbildung eines plastischen Designelementes (11) zu erzeugen (110),
eine zweite Drucksteuereinrichtung (36), die dazu eingerichtet ist aus der 3D-Druckvorlage im Steuerdaten zur Ausbildung eines dreidimensionalen Druckmusters zu erzeugen (112), sowie
eine zweiten Druckeinheit (40), die dazu eingerichtet ist in einem zweiten Druckvorgang ein dreidimensionales Druckmuster auf den zugeführten Authentisierungsdatenträger (1) auf das im ersten Druckvorgang aufgebrachte flächige Druckmuster aufzubringen (114).

## Claims

1. Method for producing a plastic design element on an authentication data carrier comprising the following steps:
- providing (100) an individual starting image (60),
- generating printing data, which reproduce (102) the starting image (60) as a planar printed pattern,
- applying the starting image (60) as a planar printed pattern in a first printing process (106),
- carrying out an edge detection to determine dominating edges (20) in the printing data, which delimit the surface areas (22) contained in the printing data from one another and reproduce (110) the contours of the motif (19) contained in the starting image (60),
- creating a 3D printing template, which is based on the dominating edges (20) found,
- applying a three-dimensional printed pattern in accordance with the 3D printing template to the planar printed pattern in a second printing process (114).

2. Method according to Claim 1, **characterized in that**, to generate the printing data, the individual starting image (60) provided by the user (50) is combined with design specifications and boundary conditions for the type of authentication data carrier (1) to be processed.

3. Method according to Claim 1, **characterized in that** the printing data are divided into first area data, which are embodied in the form of a typical two-dimensional print on an authentication data carrier (1), and second area data, in which a three-dimensional print job takes place.

4. Method according to Claim 3, **characterized in that** the edge detection is only executed in the second area data.

5. Method according to Claim 1, **characterized in that** the 3D print is executed using a defined height.

6. Method according to Claim 1, **characterized in that** the contours formed by dominating edges (20) form plastic design elements (11), which are produced in the second printing process (114) as a three-dimensional print job.

7. Method according to Claim 1, **characterized in that** surface areas (22) delimited by the dominating edges (20) are embodied (114) in the second printing process as a three-dimensional print job.

8. Method according to Claim 1, **characterized in that** the dominating edges (20) are applied with a different thickness than the delimited surface areas (22).

9. Method according to Claim 1, **characterized in that** the thickness with which the delimited surface areas (22) are applied depends on further information ascertained from the printing data, in particular on the colour and/or the position.

10. Device for producing a plastic design element on an authentication data carrier, comprising
an image preparation unit (30), which is configured to generate printing data from an individual starting image (60) provided by a user, which data reproduce (102) the starting image (60) as a planar printed pattern,
a first printing control unit (34), which is configured to generate (104) control data for forming a two-dimensional printed pattern from the received printing data,
a first printing unit (38), which is configured to apply (106) a planar printed pattern to the supplied authentication data carrier (1) in accordance with the control data in a first printing process,
**characterized in that** it furthermore comprises:
an edge detection unit (32), which is configured to carry out an edge detection on the printing data in order to generate (110) a 3D printing template for forming a plastic design element (11),
a second printing control unit (36), which is configured to generate (112) a three-dimensional printed pattern from the 3D printing template in the control data, and
a second printing unit (40), which is configured to apply (114) a three-dimensional printed pattern onto the supplied authentication data carrier (1) onto the planar printed pattern applied in the first printing process in a second printing process.

## Revendications

1. Procédé de fabrication d'un élément de design plastique sur un support de données d'authentification, comprenant les étapes suivantes :
- la fourniture (100) d'une image initiale individuelle (60)
- la génération de données d'impression qui reproduisent l'image initiale (60) sous forme de motif d'impression plat (102),
- l'application de l'image initiale (60) sous forme de motif d'impression plat dans un premier processus d'impression (106),
- la réalisation d'une détection des bords afin de déterminer les bords dominants (20) dans les données d'impression, qui délimitent les zones de surface (22) contenues dans les données d'impression les unes des autres et reproduisent (110) les contours du motif (19) contenu dans l'image initiale (60),
- la création d'un modèle d'impression 3D basé sur les bords dominants (20) trouvés,
- l'application d'un motif d'impression tridimensionnel correspondant au modèle d'impression 3D sur le motif d'impression plat dans un deuxième processus d'impression (114).

2. Procédé selon la revendication 1, **caractérisé en ce que**, pour générer les données d'impression, l'image initiale individuelle (60) fournie par l'utilisateur (50) est combinée avec des spécifications de design et des conditions limites pour le type de support de données d'authentification (1) à traiter.

3. Procédé selon la revendication 1, **caractérisé en ce que** les données d'impression sont subdivisées en premières données de zone, qui sont exécutées sous la forme d'une impression bidimensionnelle classique sur un support de données d'authentification (1), et en deuxièmes données de zone, dans lesquelles une impression tridimensionnelle est effectuée.

4. Procédé selon la revendication 3, **caractérisé en ce que** la détection des bords n'est réalisée que dans les deuxièmes données de zone.

5. Procédé selon la revendication 1, **caractérisé en ce que** l'impression 3D est réalisée avec une hauteur fixée.

6. Procédé selon la revendication 1, **caractérisé en ce que** les contours formés par les bords dominants (20) forment des éléments de design plastiques (11) qui sont fabriqués dans le deuxième processus d'impression (114) sous forme d'impression tridimensionnelle.

7. Procédé selon la revendication 1, **caractérisé en ce que** les zones de surface (22) délimitées par les bords dominants (20) sont réalisées (114) sous forme d'impression tridimensionnelle dans le deuxième processus d'impression.

8. Procédé selon la revendication 1, **caractérisé en ce que** les bords dominants (20) sont appliqués avec une épaisseur différente de celle des zones de surface délimitées (22).

9. Procédé selon la revendication 1, **caractérisé en ce que** l'épaisseur avec laquelle les zones de surface délimitées (22) sont appliquées dépend d'autres informations déterminées à partir des données d'impression, notamment de la couleur et/ou de la position.

10. Dispositif de fabrication d'un élément de design plastique sur un support de données d'authentification, comprenant :
un appareil de traitement d'images (30) qui est adapté pour générer, à partir d'une image initiale individuelle (60) fournie par un utilisateur, des données d'impression qui reproduisent l'image initiale (60) sous forme de motif d'impression plat (102),
un premier appareil de commande d'impression (34) qui est adapté pour générer (104), à partir des données d'impression reçues, des données de commande pour former un motif d'impression bidimensionnel,
une première unité d'impression (38) qui est adaptée pour appliquer (106) un motif d'impression plat sur le support d'authentification (1) amené, conformément aux données de commande, dans un premier processus d'impression,
**caractérisé en ce qu'**il présente en outre :
un appareil de détection des bords (32) qui est adapté pour effectuer une détection des bords sur les données d'impression afin de générer (110) un modèle d'impression 3D pour la formation d'un élément de design plastique (11),
un deuxième appareil de commande d'impression (36) qui est adapté pour générer (112) des données de commande à partir du modèle d'impression 3D afin de former un motif d'impression tridimensionnel, ainsi que
une deuxième unité d'impression (40) qui est adaptée pour appliquer (114), dans un deuxième processus d'impression, un motif d'impression tridimensionnel sur le support de données d'authentification (1) amené, sur le motif d'impression plat appliqué dans le premier processus d'impression.
